# EUROPEAN PATENT APPLICATION

(11) **EP 4 831 017 A1**
(43) Date of publication of application: **28.10.2026**
(21) Application number: 26174798.4
(22) Date of filing: 27.04.2026
(51) Int. Cl.: B60T 1/06, B60T 13/74, F16D 55/226, F16D 63/00, F16D 65/18, F16D 66/00, F16D 121/24

(54) **ELECTRO-MECHANICAL BRAKE APPARATUS AND VEHICLE**

(30) Priority: 27.04.2025 CN 202510538807
(71) Applicant: HUAWEI TECHNOLOGIES CO., LTD., Shenzhen 518129 (CN)
(72) Inventor: ZOU, Dingchao, Shenzhen, 518129 (CN); XU, Yankun, Shenzhen, 518129 (CN); ZHANG, Weilong, Shenzhen, 518129 (CN)
(74) Representative: Gill Jennings & Every LLP

(57) **Abstract**

Electro-mechanical brake apparatus (100) including a motor (20), a controller (30), a transmission (40), and a partition plate (70). The controller includes a circuit board (31) and a bus capacitor (32). The motor, the circuit board and the transmission are respectively arranged in different chambers. The circuit board is arranged in an axial direction of a shaft of the motor, the transmission is arranged in a radial direction of the shaft, and the middle partition plate is configured to separate a stator (22) of the motor from the circuit board. The bus capacitor is fastened on the circuit board and faces the stator, and a height of the capacitor is greater than a gap between the circuit board and the partition plate.

## Description

### TECHNICAL FIELD

This application relates to the field of vehicle technologies, and in particular, to an electro-mechanical brake apparatus and a vehicle.

### BACKGROUND

An electro-mechanical brake apparatus is used to drive a friction plate to brake a brake disc. Limited by wheel space of a vehicle, a size of the electro-mechanical brake apparatus needs to be compressed, to avoid interference between the electro-mechanical brake apparatus and a steering system or a suspension system of the vehicle.

### SUMMARY

This application provides an electro-mechanical brake apparatus with a partitioned-chamber layout and a vehicle. According to the electro-mechanical brake apparatus, different internal chambers are used to respectively accommodate various components, and a gap is compressed, to reduce an outline size of the electro-mechanical brake apparatus.

According to a first aspect, this application provides an electro-mechanical brake apparatus with a partitioned-chamber layout. The electro-mechanical brake apparatus includes a brake motor, a motor controller, a transmission gear assembly, a middle partition plate, and a brake pad. The motor controller is configured to control rotation of the brake motor. The brake motor is configured to drive, through the transmission gear assembly, the brake pad to brake. The motor controller includes a circuit board and a bus capacitor. The brake motor, the circuit board, and the transmission gear assembly are respectively arranged in different chambers of the electro-mechanical brake apparatus, the circuit board is arranged in an axial direction of a motor shaft of the brake motor, and the transmission gear assembly is arranged in a radial direction of the motor shaft of the brake motor. In the axial direction of the motor shaft of the brake motor, the middle partition plate is arranged between a stator of the brake motor and the circuit board, the middle partition plate is configured to separate the brake motor from the circuit board, the bus capacitor is fastened on a surface that is of the circuit board and that faces the stator, and a height of the bus capacitor is greater than a gap between the circuit board and the middle partition plate in a direction perpendicular to the circuit board.

A housing of the electro-mechanical brake apparatus with a partitioned-chamber layout provided in this application includes a plurality of chambers, and the brake motor, the transmission gear assembly, and the circuit board are distributed in the different chambers. The circuit board and the stator of the brake motor are arranged in the axial direction of the motor shaft, and the transmission gear assembly and the motor shaft of the brake motor are arranged in the radial direction of the motor shaft. The circuit board and the stator are separated by the middle partition plate in the axial direction of the motor shaft. The middle partition plate is configured to prevent lubricating oil on the side of the brake motor from flowing to the side of the circuit board.

According to the electro-mechanical brake apparatus provided in this application, in the axial direction of the motor shaft, the bus capacitor is further fastened on the side that is of the circuit board and that faces the stator, and the bus capacitor is made to pass through the middle partition plate to compress a distance between the circuit board and the middle partition plate. In other words, the bus capacitor with a large axial size in the circuit board and the middle partition plate are spaced apart in the radial direction of the motor shaft. In this way, according to the electro-mechanical brake apparatus provided in this application, a chamber size of the circuit board is reduced to compress an overall outline size of the electro-mechanical brake apparatus, so that an internal structure of the electro-mechanical brake apparatus is more compact, and a size in the axial direction of the motor shaft is smaller.

In an implementation, the bus capacitor includes an avoidance notch, the avoidance notch is configured to avoid the bus capacitor and allow the bus capacitor to pass through, and a sealing ring member is included between the avoidance notch and the bus capacitor in the radial direction of the motor shaft.

In an implementation, in the axial direction of the motor shaft of the brake motor, the motor shaft of the brake motor extends toward the circuit board and passes through the middle partition plate, an end portion that is of the motor shaft and that faces the circuit board is configured to fasten one magnetic ring, the circuit board is configured to fasten a sensing chip of one position sensor, and a projection of the magnetic ring onto the circuit board partially overlaps with the sensing chip.

In this implementation, according to the electro-mechanical brake apparatus provided in this application, the sensing chip of the position sensor is integrated on the circuit board of the motor controller, so that a rotation speed of the magnetic ring driven by the motor shaft can be monitored. In this way, the motor controller detects a rotation speed of the brake motor to form closed-loop control, to improve reliability of the brake motor.

In an implementation, the circuit board includes a first metal member, and the middle partition plate includes a first shielding wall. The first metal member and the first shielding wall abut against each other in the axial direction of the motor shaft of the brake motor. The first metal member is arranged between the sensing chip and the bus capacitor in the radial direction of the motor shaft of the brake motor.

In this implementation, the first metal member and the first shielding wall respectively extend in opposite directions and abut against each other in the axial direction of the motor shaft, and the first metal member and the first shielding wall further extend approximately in a direction perpendicular to an arrangement direction of the sensing chip and the bus capacitor, to form electromagnetic shielding between the sensing chip and the bus capacitor in a chamber in which the circuit board is located, so that mutual interference between components in the motor controller is avoided, to improve precision of controlling the brake motor and to improve detection precision of the position sensor.

In an implementation, in the axial direction of the motor shaft of the brake motor, a gear of the transmission gear assembly is arranged between the stator and the circuit board, the gear of the transmission gear assembly includes a first end face that faces the circuit board, and a gap between the bus capacitor and the stator is greater than a gap between the first end face and the stator.

In this implementation, in the axial direction of the motor shaft, the gear of the transmission gear assembly is arranged on a side that is of the middle partition plate and that faces away from the circuit board, and the bus capacitor on the circuit board further extends toward the stator after passing through the middle partition plate, and is spaced from the gear of the transmission gear assembly in the radial direction of the motor shaft, so that a chamber size of the circuit board can be further reduced, to compress an overall outline size of the electro-mechanical brake apparatus. In this way, an internal structure of the electro-mechanical brake apparatus is more compact, and a size in the axial direction of motor shaft is smaller.

In an implementation, the housing of the electro-mechanical brake apparatus is configured to fasten one plug terminal, and the motor controller includes one terminal interface. In the axial direction of the motor shaft of the brake motor, the terminal interface is fastened on the surface that is of the circuit board and that faces the stator, and a segment of the plug terminal extends into the housing and is electrically connected to the terminal interface.

In this implementation, according to the electro-mechanical brake apparatus provided in this application, in the axial direction of the motor shaft, the terminal interface is further fastened on the side that is of the circuit board and that faces the stator, so that the plug terminal extends into the housing of the electro-mechanical brake apparatus from the side of the stator and is electrically connected to the motor controller. In the radial direction of the motor shaft, the plug terminal is spaced from the middle partition plate and the transmission gear assembly, to effectively control an outline size, in the axial direction of the motor shaft, of the electro-mechanical brake apparatus provided in this application, so that an internal structure of the electro-mechanical brake apparatus is more compact.

In an implementation, in the axial direction of the motor shaft of the brake motor, the gear of the transmission gear assembly is arranged between the middle partition plate and the stator, the middle partition plate includes a plurality of positioning holes, each of the positioning holes is configured to fasten an outer ring of one bearing, and an inner ring of each bearing is configured to fasten one transmission shaft of the transmission gear assembly.

In this implementation, in the axial direction of the motor shaft of the brake motor, the circuit board and the gear of the transmission gear assembly are arranged on two sides of the middle partition plate respectively, and a side that is of the middle partition plate and that faces the stator is configured to fasten a plurality of bearings to support the transmission shaft of the transmission gear assembly.

In an implementation, the plug terminal includes another segment located outside the housing, the another segment is configured to extend in the axial direction of the motor shaft of the brake motor, and a segment of the plug terminal and the motor shaft of the brake motor are arranged on two sides of the transmission gear assembly in the radial direction of the motor shaft of the brake motor.

In this implementation, the stator of the brake motor, the gear of the transmission gear assembly, the middle partition plate, and the circuit board are sequentially arranged in the axial direction of the motor shaft of the brake motor, and the plug terminal is arranged, in the radial direction of the motor shaft of the brake motor, in space on a side that is of the transmission gear assembly and that faces away from the brake motor, so that a structure of the electro-mechanical brake apparatus is more compact.

In an implementation, the circuit board includes a second metal member, and the middle partition plate includes a second shielding wall. The second metal member and the second shielding wall abut against each other in the axial direction of the motor shaft of the brake motor. The second metal member is arranged between the terminal interface and the transmission gear assembly in the radial direction of the motor shaft of the brake motor.

In this implementation, the second metal member and the second shielding wall respectively extend in opposite directions and abut against each other in the axial direction of the motor shaft, and the second metal member and the second shielding wall further extend approximately in a direction perpendicular to an arrangement direction of the transmission gear assembly and the terminal interface. The sensing chip is aligned with the motor shaft, and the sensing chip and the terminal interface are arranged on the two sides of the transmission gear assembly respectively, so that the second metal member and the second shielding wall can form electromagnetic shielding between the sensing chip and the terminal interface in the chamber in which the circuit board is located, and mutual interference between components in the motor controller is avoided, to improve detection precision of the position sensor and ensure reliable communication between the motor controller and an external component.

In an implementation, the housing includes a bearing cover plate, the bearing cover plate includes a plurality of positioning holes, each of the positioning holes is configured to fasten an outer ring of one bearing, and an inner ring of each bearing is configured to fasten one transmission shaft of the transmission gear assembly. The bearing cover plate is arranged, in the axial direction of the motor shaft of the brake motor, on a side that is of the middle partition plate and that faces away from the stator, and the bearing cover plate and the circuit board are arranged adjacent to each other in the radial direction of the motor shaft of the brake motor.

In this implementation, in the radial direction of the motor shaft of the brake motor, the gear of the transmission gear assembly and the middle partition plate are spaced apart, the circuit board and the bearing cover plate are spaced apart, the bearing cover plate includes a plurality of positioning holes, each of the positioning holes is configured to fasten an outer ring of one bearing, and an inner ring of each bearing is configured to fasten one transmission shaft of the transmission gear assembly.

In an implementation, the plug terminal includes another segment located outside the housing, the another segment is bent in a U shape and then extends toward the circuit board in the axial direction of the motor shaft of the brake motor, and the another segment and the motor shaft are arranged on two sides of the bus capacitor in the radial direction of the motor shaft of the brake motor.

In this implementation, the stator of the brake motor, the middle partition plate, and the circuit board are sequentially arranged in the axial direction of the motor shaft of the brake motor, so that an axial size of the electro-mechanical brake apparatus is smaller. In the radial direction of the motor shaft of the brake motor, the plug terminal is arranged in space on a side that is of the motor shaft and that faces away from the transmission gear assembly, and extends toward the circuit board after being bent, so that interference between the plug terminal and the stator of the brake motor is avoided, and the structure of the electro-mechanical brake apparatus is more compact.

In an implementation, the circuit board includes a third metal member, and the middle partition plate includes a third shielding wall. The third metal member and the third shielding wall abut against each other in the axial direction of the motor shaft of the brake motor. In the radial direction of the motor shaft of the brake motor, the terminal interface and the bus capacitor are arranged on a same side of the motor shaft of the brake motor, and the third metal member is arranged between the terminal interface and the bus capacitor.

In this implementation, the gear of the transmission gear assembly and the circuit board are arranged on two sides of the motor shaft respectively in the radial direction of the motor shaft of the brake motor, and the terminal interface and the bus capacitor are spaced apart in a direction perpendicular to an arrangement direction of the transmission gear assembly and the circuit board. According to the electro-mechanical brake apparatus provided in this application, electromagnetic shielding is further formed between the terminal interface and the bus capacitor through the third metal member and the third shielding wall that extend in opposite directions and abut against each other in the axial direction of the motor shaft, so that mutual interference between components in the motor controller is avoided, to improve precision of controlling the brake motor and ensure reliable communication between the motor controller and an external component.

In an implementation, the terminal interface includes a plurality of high-voltage sockets and a plurality of low-voltage sockets, the plurality of high-voltage sockets are configured to receive a high-voltage drive signal of the brake motor through the plug terminal, and the plurality of low-voltage sockets are configured to transmit a low-voltage control signal through the plug terminal. In a direction perpendicular to an arrangement direction of the motor shaft and the transmission gear assembly, the bus capacitor and the terminal interface are spaced apart, and the plurality of high-voltage sockets are arranged between the bus capacitor and the plurality of low-voltage sockets.

In this implementation, the high-voltage socket is arranged close to the side of the bus capacitor in the direction perpendicular to the arrangement direction of the motor shaft and the transmission gear assembly, so that a transmission path between the high-voltage drive signal and the bus capacitor can be shortened, and a transmission path of the low-voltage control signal and a transmission path of the high-voltage drive signal do not cross, to facilitate transmission circuit arrangement on the circuit board.

In an implementation, the circuit board includes a three-phase copper busbar socket, and a three-phase copper busbar of the brake motor is configured to extend into the three-phase copper busbar socket. In the axial direction of the motor shaft of the brake motor, the three-phase copper busbar socket penetrates the circuit board, and a length of the three-phase copper busbar is greater than a gap between the circuit board and the stator. In a circumferential direction of the motor shaft of the brake motor, the three-phase copper busbar socket and the bus capacitor are spaced apart, and three sockets in the three-phase copper busbar socket are spaced apart sequentially.

In this implementation, the three-phase copper busbar of the brake motor penetrates the circuit board and receives a drive signal of the motor controller. The three-phase copper busbar is close to the bus capacitor in the circumferential direction of the motor shaft, and the three copper busbars in the three-phase copper busbar are spaced apart in the circumferential direction of the motor shaft, so that a transmission path between the three-phase copper busbar and the bus capacitor can be shortened, and planar space of the circuit board is properly used. In this way, the circuit board is arranged more compactly, and a size, in the radial direction of the motor shaft, of the electro-mechanical brake apparatus provided in this application is compressed.

In an implementation, the motor shaft of the brake motor is configured to fasten one motor gear and an inner ring of one motor bearing, the brake motor drives, through the motor shaft, the motor gear to rotate and drive the gear of the transmission gear assembly, the housing includes a second partition plate, and the second partition plate is configured to fasten an outer ring of the motor bearing. In the axial direction of the motor shaft of the brake motor, the second partition plate is arranged between the middle partition plate and the stator, and the motor bearing is arranged between the motor gear and the stator.

In this implementation, the second partition plate in the housing of the electro-mechanical brake apparatus is configured to separate the chamber of the stator of the brake motor from the chamber of the transmission gear assembly. The second partition plate supports the motor shaft through the motor bearing, so that the motor shaft can extend into the chamber in which the gear of the transmission gear assembly is located and be in a transmission connection to the gear.

In an implementation, the second partition plate includes a plurality of positioning holes, each of the positioning holes is configured to fasten an outer ring of one bearing, and an inner ring of each bearing is configured to fasten one transmission shaft of the transmission gear assembly. The second partition plate is configured to support the other end of each transmission shaft in the transmission gear assembly.

According to a second aspect, this application provides a vehicle. The vehicle includes a wheel and the electro-mechanical brake apparatus with a partitioned-chamber layout provided in any one of the foregoing implementations. The electro-mechanical brake apparatus is fastened to a frame of the vehicle, and the electro-mechanical brake apparatus is configured to brake a brake disc of the wheel. Because the foregoing electro-mechanical brake apparatus is used in the vehicle provided in the second aspect of this application, wheel space of the vehicle is larger, and more space is reserved for a suspension to obtain a larger steering angle.

### BRIEF DESCRIPTION OF DRAWINGS

To describe technical solutions in this application more clearly, the following briefly describes accompanying drawings used in describing implementations. Clearly, the accompanying drawings in the following descriptions are merely some implementations of this application, and a person of ordinary skill in the art may still derive other drawings from these accompanying drawings without creative efforts.
FIG. 1 is a diagram of a structure of a vehicle at a wheel according to an embodiment of this application;
FIG. 2 is a diagram of a framework of an electro-mechanical brake apparatus according to an embodiment of this application;
FIG. 3 is a diagram of a framework of an electro-mechanical brake apparatus according to an embodiment of this application;
FIG. 4 is a diagram of a partial structure of an electro-mechanical brake apparatus according to an embodiment of this application;
FIG. 5 is an exploded view of a structure of an electro-mechanical brake apparatus according to an embodiment of this application;
FIG. 6 is a cross-sectional view of an electro-mechanical brake apparatus according to an embodiment of this application;
FIG. 7 is a diagram of a structure of an electro-mechanical brake apparatus according to an embodiment of this application;
FIG. 8 is an exploded view of a structure of an electro-mechanical brake apparatus according to an embodiment of this application;
FIG. 9 is a cross-sectional view of an electro-mechanical brake apparatus according to an embodiment of this application;
FIG. 10 is a plan view of a structure of an electro-mechanical brake apparatus according to an embodiment of this application;
FIG. 11 is a cross-sectional view of an electro-mechanical brake apparatus according to an embodiment of this application;
FIG. 12 is a diagram of a structure of an electro-mechanical brake apparatus according to an embodiment of this application;
FIG. 13 is an exploded view of a structure of an electro-mechanical brake apparatus according to an embodiment of this application;
FIG. 14 is a diagram of a structure of an electro-mechanical brake apparatus according to an embodiment of this application;
FIG. 15 is a diagram of a partial structure of an electro-mechanical brake apparatus according to an embodiment of this application;
FIG. 16 is a cross-sectional view of an electro-mechanical brake apparatus according to an embodiment of this application;
FIG. 17 is a diagram of a framework of an electro-mechanical brake apparatus according to an embodiment of this application;
FIG. 18 is a diagram of a partial structure of an electro-mechanical brake apparatus according to an embodiment of this application;
FIG. 19 is an exploded view of a structure of an electro-mechanical brake apparatus according to an embodiment of this application; and
FIG. 20 is a cross-sectional view of an electro-mechanical brake apparatus according to an embodiment of this application.

### DESCRIPTION OF EMBODIMENTS

The following describes technical solutions in embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

This application provides an electro-mechanical brake apparatus with a partitioned-chamber layout. The electro-mechanical brake apparatus includes a brake motor, a motor controller, a transmission gear assembly, a middle partition plate, and a brake pad. The motor controller is configured to control rotation of the brake motor. The brake motor is configured to drive, through the transmission gear assembly, the brake pad to brake. The motor controller includes a circuit board and a bus capacitor. The brake motor, the circuit board, and the transmission gear assembly are respectively arranged in different chambers of the electro-mechanical brake apparatus, the circuit board is arranged in an axial direction of a motor shaft of the brake motor, and the transmission gear assembly is arranged in a radial direction of the motor shaft of the brake motor. In the axial direction of the motor shaft of the brake motor, the middle partition plate is arranged between a stator of the brake motor and the circuit board, the middle partition plate is configured to separate the brake motor from the circuit board, the bus capacitor is fastened on a surface that is of the circuit board and that faces the stator, and a height of the bus capacitor is greater than a gap between the circuit board and the middle partition plate in a direction perpendicular to the circuit board. According to the electro-mechanical brake apparatus with a partitioned-chamber layout provided in this application, a chamber size of the circuit board is reduced to compress an overall outline size of the electro-mechanical brake apparatus, so that an internal structure of the electro-mechanical brake apparatus is more compact, and a size in the axial direction of the motor shaft is smaller.

This application provides a vehicle. The vehicle includes a wheel and the electro-mechanical brake apparatus with a partitioned-chamber layout synchronously provided in this application. The electro-mechanical brake apparatus is fastened to a frame of the vehicle, and the electro-mechanical brake apparatus is configured to brake a brake disc of the wheel. Because the foregoing electro-mechanical brake apparatus is used in the vehicle provided in this application, wheel space of the vehicle is larger, and more space is reserved for a suspension to obtain a larger steering angle.

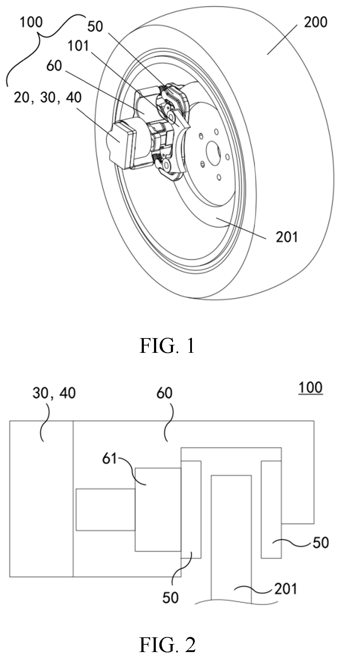

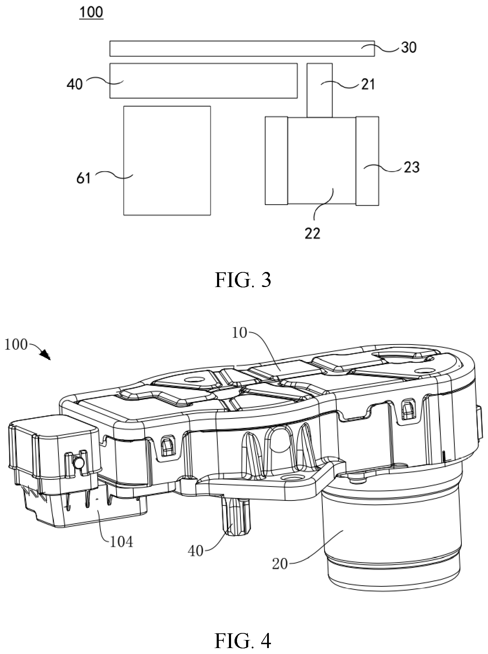

Refer to FIG. 1, FIG. 2, and FIG. 3. FIG. 1 is a diagram of a structure of a vehicle at a wheel 200 according to an embodiment of this application. FIG. 2 is a diagram of a framework of an electro-mechanical brake apparatus 100 according to an embodiment of this application. FIG. 3 is a diagram of a framework of the electro-mechanical brake apparatus 100 according to an embodiment of this application.

The vehicle provided in this application includes a wheel 200 and an electro-mechanical brake apparatus 100. The wheel 200 is rotatably connected to a frame. The wheel 200 includes a brake disc 201. The brake disc 201 is fastened to a wheel hub of the wheel 200. In a traveling process of the vehicle, the brake disc 201 is configured to rotate synchronously with the wheel hub of the wheel 200. The electro-mechanical brake apparatus 100 is the electro-mechanical brake apparatus with a partitioned-chamber layout synchronously provided in embodiments of this application. The electro-mechanical brake apparatus 100 is fastened to the frame. The electro-mechanical brake apparatus 100 is configured to be in contact with the brake disc 201 to form a friction force. In this way, rotation of the wheel 200 is limited, to brake the vehicle.

The electro-mechanical brake apparatus 100 provided in this application includes a brake motor 20, a motor controller 30, a transmission gear assembly 40, and a brake pad 50. The motor controller 30 is configured to control rotation of the brake motor 20. The brake motor 20 is configured to drive, through the transmission gear assembly 40, the brake pad 50 to brake.

In an embodiment, the brake motor 20 includes a motor shaft 21, a stator 22, and a rotor 23. The stator 22 is sleeved on a periphery of the rotor 23 coaxially. The motor shaft 21 is fastened to the rotor 23. The stator 22 is configured to receive external drive to generate an alternating magnetic field, to drive the rotor 23 and the motor shaft 21 to rotate synchronously to output a braking force.

The motor controller 30 is configured to be electrically connected to the brake motor 20, and the motor controller 30 is configured to receive an external instruction to control the brake motor 20 to output the braking force. The transmission gear assembly 40 is configured to be in a transmission connection to the motor shaft 21 of the brake motor 20 and the brake pad 50. The brake motor 20 is configured to drive, through the transmission gear assembly 40, the brake pad 50 to move toward the brake disc 201, so that the brake pad 50 is in contact with the brake disc 201 to form a friction force. In this way, rotation of the wheel 200 is limited, to brake the vehicle.

In an embodiment, two brake pads 50 are arranged on two sides of the brake disc 201 respectively, and the brake motor 20 is driven by the motor controller 30 to drive the two brake pads 50 to slide toward the brake disc 201 to brake the brake disc 201.

In an embodiment, the electro-mechanical brake apparatus 100 includes a screw nut 61. A screw or a nut in the screw nut 61 is configured to receive drive from the transmission gear assembly 40 to rotate, and the nut or the screw in the screw nut 61 is configured to drive the brake pad 50 to slide toward the brake disc 201.

In an embodiment, the electro-mechanical brake apparatus 100 provided in this application further includes a housing 10 and a caliper body 60. The housing 10 is configured to accommodate the brake motor 20, the motor controller 30, and the transmission gear assembly 40. The caliper body 60 is configured to accommodate the screw nut 61. The housing 10 is fastened to the caliper body 60. The transmission gear assembly 40 is in a transmission connection to the screw nut 61.

In an embodiment, the electro-mechanical brake apparatus 100 further includes a caliper support 101. The caliper support 101 is fastened to the frame and is slidably connected to the caliper body 60, and the caliper support 101 is further configured to be slidably connected to the two brake pads 50. In a braking process of the vehicle in this application, power output by the motor shaft 21 of the brake motor 20 is transferred to the two brake pads 50 through the transmission gear assembly 40 and the screw nut 61 sequentially, so that the brake pads 50 are driven from two sides to slide toward the brake disc 201 to brake the wheel 200.

The motor controller 30 includes a circuit board 31. The electro-mechanical brake apparatus 100 provided in this application includes a plurality of chambers. The brake motor 20, the circuit board 31, and the transmission gear assembly 40 are respectively arranged in different chambers of the electro-mechanical brake apparatus 100. The circuit board 31 is arranged in an axial direction of the motor shaft 21 of the brake motor 20. The transmission gear assembly 40 is arranged in a radial direction of the motor shaft 21 of the brake motor 20.

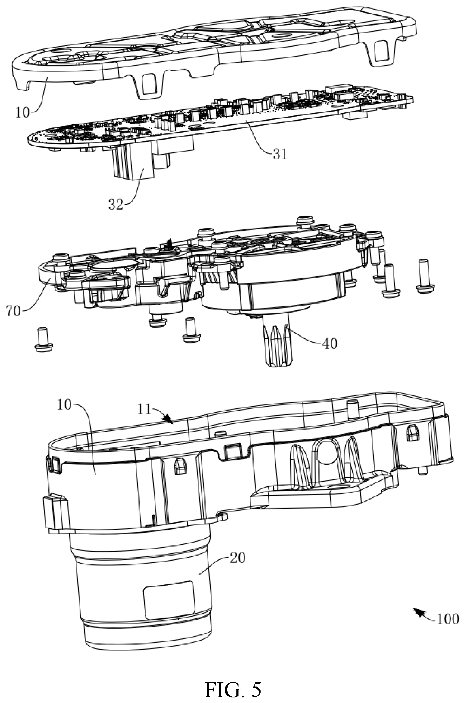

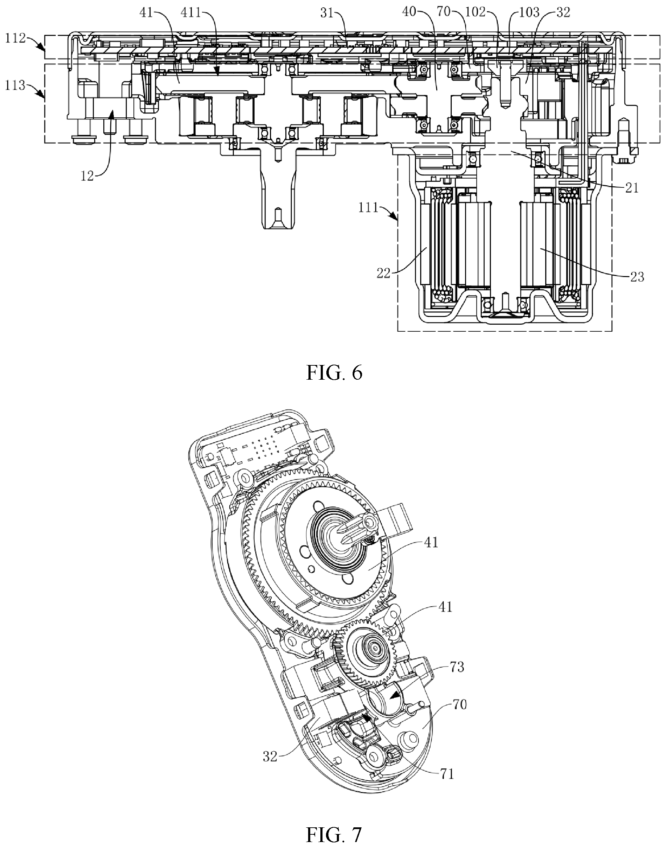

Refer to FIG. 4, FIG. 5, and FIG. 6. FIG. 4 is a diagram of a partial structure of the electro-mechanical brake apparatus 100 according to an embodiment of this application. FIG. 5 is an exploded view of a structure of the electro-mechanical brake apparatus 100 according to an embodiment of this application. FIG. 6 is a cross-sectional view of the electro-mechanical brake apparatus 100 according to an embodiment of this application.

The housing 10 of the electro-mechanical brake apparatus 100 includes a receiving chamber 11. The brake motor 20, the motor controller 30, and at least a part of the transmission gear assembly 40 are located in the receiving chamber 11. The stator 22 of the brake motor 20 is fastened to the housing 10. The transmission gear assembly 40 is located on one side of the motor shaft 21 in the radial direction of the motor shaft 21 of the brake motor 20. The circuit board 31 is located on one side of the brake motor 20 in the axial direction of the motor shaft 21 of the brake motor 20.

The receiving chamber 11 of the housing 10 includes a first chamber 111, a second chamber 112, and a third chamber 113. The first chamber 111 is configured to accommodate the stator 22, the rotor 23, and a part of the motor shaft 21 of the brake motor 20. The second chamber 112 is configured to accommodate the circuit board 31. The second chamber 112 and the first chamber 111 are arranged in the axial direction of the motor shaft 21 of the brake motor 20. The third chamber 113 is configured to accommodate a gear 41 of the transmission gear assembly 40. In the embodiment shown in the figure, the first chamber 111, the third chamber 113, and the second chamber 112 are sequentially arranged in the axial direction of the motor shaft 21, and the transmission gear assembly 40 in the third chamber 113 is arranged on one side of the motor shaft 21 in the radial direction of the motor shaft 21. A segment of the motor shaft 21 extends into the third chamber 113 and is engaged with the gear of the transmission gear assembly 40 in the axial direction of the motor shaft 21.

The electro-mechanical brake apparatus 100 provided in this application further includes a middle partition plate 70. The middle partition plate 70 is arranged between the stator 22 of the brake motor 20 and the circuit board 31 in the axial direction of the motor shaft 21 of the brake motor 20. In embodiments shown in FIG. 4 to FIG. 6, the middle partition plate 70 is configured to separate the second chamber 112 from the third chamber 113. In other words, the middle partition plate 70 is configured to separate the brake motor 20 from the circuit board 31, and is configured to separate the transmission gear assembly 40 from the circuit board 31. The middle partition plate 70 is configured to prevent oil used for lubricating transmission between the motor shaft 21 and the transmission gear assembly 40 from flowing into the second chamber 112 on the side of the circuit board 31.

The motor controller 30 further includes a bus capacitor 32. The bus capacitor 32 is fastened on a surface of a side that is of the circuit board 31 and that faces the stator 22. A height of the bus capacitor 32 is greater than a gap between the circuit board 31 and the middle partition plate 70 in the axial direction of the motor shaft 21. The middle partition plate 70 and the bus capacitor 32 are spaced apart in the radial direction of the motor shaft 21.

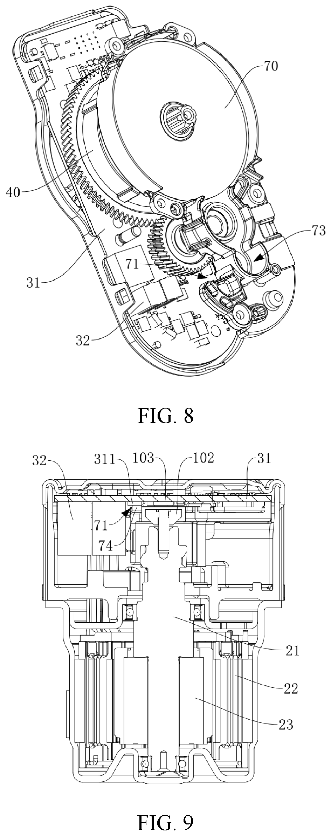

Refer to FIG. 7 and FIG. 8. FIG. 7 is a diagram of a structure of the electro-mechanical brake apparatus 100 according to an embodiment of this application. FIG. 8 is an exploded view of a structure of the electro-mechanical brake apparatus 100 according to an embodiment of this application.

In an embodiment, the middle partition plate 70 includes an avoidance notch 71. The avoidance notch 71 is configured to avoid the bus capacitor 32 and allow the bus capacitor 32 to pass through. In the axial direction of the motor shaft 21, one end of two opposite ends of the bus capacitor 32 is located in the second chamber 112 and is fastened to the circuit board 31, and the other end passes through the avoidance notch 71 and extends into the third chamber 113. Because an outer surface of the bus capacitor 32 has good sealing performance, normal working of the bus capacitor 32 and the motor controller 30 is not affected when a part of the bus capacitor passes through the middle partition plate 70.

An assembling gap is reserved between the avoidance notch 71 and the bus capacitor 32 in the radial direction of the motor shaft 21. In an embodiment, the middle partition plate 70 includes a sealing ring member, and the sealing ring member is disposed around a periphery of the bus capacitor 32, and is configured to fill the gap between the avoidance notch 71 and the bus capacitor 32, to prevent lubricating grease or lubricating oil of the brake motor 20 in the first chamber 111 from flowing into the second chamber 112.

The circuit board 31 of the electro-mechanical brake apparatus 100 provided in this application and the stator 22 of the brake motor 20 are arranged in the axial direction of the motor shaft 21. The transmission gear assembly 40 and the motor shaft 21 of the brake motor 20 are arranged in the radial direction of the motor shaft 21. The middle partition plate 70 is included between the circuit board 31 and the stator 22 in the axial direction of the motor shaft 21. The middle partition plate 70 is configured to prevent the lubricating grease or lubricating oil on the side of the brake motor 20 from flowing to the side of the circuit board 31, to prevent an electric device and a conductive circuit on the circuit board 31 from being corroded by the lubricating grease or the lubricating oil.

According to the electro-mechanical brake apparatus 100 provided in this application, in the axial direction of the motor shaft 21, the bus capacitor 32 is further fastened on the side that is of the circuit board 31 and that faces the stator 22, and the bus capacitor 32 is made to pass through the middle partition plate 70 to compress a distance between the circuit board 31 and the middle partition plate 70. In other words, the bus capacitor 32 with a large axial size in the circuit board 31 and the middle partition plate 70 are spaced apart in the radial direction of the motor shaft 21.

In this way, according to the electro-mechanical brake apparatus 100 provided in this application, a chamber size of the circuit board 31 is reduced to compress an overall outline size of the electro-mechanical brake apparatus 100, so that an internal structure of the electro-mechanical brake apparatus 100 is more compact, and a size in the axial direction of the motor shaft 21 is smaller.

Because the foregoing electro-mechanical brake apparatus 100 is used in the vehicle provided in this application, wheel space of the vehicle is larger, and more space is reserved for a suspension to obtain a larger steering angle.

In an embodiment, a distance between the bus capacitor 32 and the stator 22 is less than a distance between the middle partition plate 70 and the stator 22 in the axial direction of the motor shaft 21. In other words, the bus capacitor 32 passes through the middle partition plate 70 and further extends toward the stator 22. In this case, the bus capacitor 32 is spaced from the motor shaft 21, the gear of the transmission gear assembly 40, and the like in the radial direction of the motor shaft 21. In this way, an axial size of the electro-mechanical brake apparatus 100 provided in this application can be further compressed, and space on a side edge of the motor shaft 21 can be fully used.

In an embodiment, the motor shaft 21 of the brake motor 20 extends toward the circuit board 31 and passes through the middle partition plate 70 in the axial direction of the motor shaft 21 of the brake motor 20. An end portion that is of the motor shaft 21 and that faces the circuit board 31 is configured to fasten one magnetic ring 102. The circuit board 31 is configured to fasten a sensing chip 103 of one position sensor. A projection of the magnetic ring 102 onto the circuit board 31 partially overlaps with the sensing chip 103.

In an embodiment, the middle partition plate 70 includes an avoidance hole 73. The avoidance hole 73 penetrates the middle partition plate 70 in the axial direction of the motor shaft 21. One end that is of the motor shaft 21 and that faces away from the stator 22 extends into the avoidance hole 73 in the axial direction of the motor shaft 21. The magnetic ring 102 is fastened to the end that is of the motor shaft 21 and that faces away from the stator 22. The sensing chip 103 is fastened on a surface of a side that is of the circuit board 31 and that faces the middle partition plate 70. The projection of the magnetic ring 102 onto the circuit board 31 is located in the sensing chip 103.

According to the electro-mechanical brake apparatus 100, the sensing chip 103 of the position sensor is integrated on the circuit board 31 of the motor controller 30, so that a rotation speed of the magnetic ring 102 driven by the motor shaft 21 can be detected. In this way, the motor controller 30 detects a rotation speed of the brake motor 20 to form closed-loop control, to improve reliability of the brake motor 20.

In an embodiment, the magnetic ring 102 is located in the avoidance hole 73 in the axial direction of the motor shaft 21, to reduce space occupied by the magnetic ring 102. In this way, the distance between the circuit board 31 and the middle partition plate 70 is compressed, so that an internal structure of the electro-mechanical brake apparatus 100 is more compact, and a size in the axial direction of the motor shaft 21 is smaller.

In an embodiment, in the axial direction of the motor shaft 21, one end of the magnetic ring 102 is fastened to the end portion of the motor shaft 21, and the other end of the magnetic ring faces the circuit board 31 and passes through the avoidance hole 73. In this way, a distance between the magnetic ring 102 and the sensing chip 103 is smaller, to facilitate detecting the rotation speed of the magnetic ring 102 by the sensing chip 103, so that detection precision of the position sensor is improved.

In an embodiment, the circuit board 31 includes a first metal member 311. The middle partition plate 70 includes a first shielding wall 74. The first metal member 311 and the first shielding wall 74 abut against each other in the axial direction of the motor shaft 21 of the brake motor 20. The first metal member 311 is arranged between the sensing chip 103 and the bus capacitor 32 in the radial direction of the motor shaft 21 of the brake motor 20.

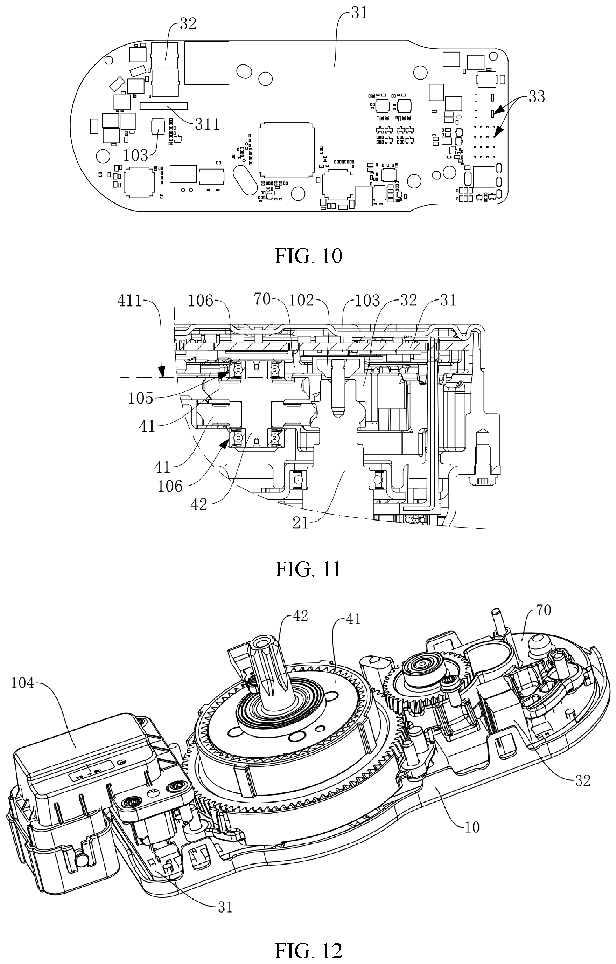

FIG. 9 is a cross-sectional view of the electro-mechanical brake apparatus 100 according to an embodiment of this application. FIG. 10 is a plan view of a structure of the electro-mechanical brake apparatus 100 according to an embodiment of this application.

In an embodiment, the first metal member 311 of the circuit board 31 is arranged between and spaced from the sensing chip 103 and the bus capacitor 32 in the radial direction of the motor shaft 21. The first shielding wall 74 of the middle partition plate 70 is arranged between and spaced from the avoidance notch 71 and the avoidance hole 73 in the radial direction of the motor shaft 21.

The avoidance notch 71 is aligned with the bus capacitor 32 in the radial direction of the motor shaft 21. The avoidance hole 73 is aligned with the sensing chip 103 in the radial direction of the motor shaft 21. The first metal member 311 and the first shielding wall 74 are aligned in the radial direction of the motor shaft 21, and abut against each other in the axial direction of the motor shaft 21. The first metal member 311 and the first shielding wall 74 are configured to separate the sensing chip 103 from the bus capacitor 32, to avoid mutual interference between the sensing chip 103 and the bus capacitor 32. This improves precision of controlling the brake motor 20 and improves detection precision of the position sensor.

In an embodiment, the first shielding wall 74 extends approximately in a direction perpendicular to an arrangement direction of the avoidance notch 71 and the avoidance hole 73. The first metal member 311 extends approximately in a direction perpendicular to an arrangement direction of the sensing chip 103 and the bus capacitor 32. The first metal member 311 and the first shielding wall abut against each other in the axial direction of the motor shaft 21, to form two independent electromagnetic shielding chambers in the second chamber 112 in which the circuit board 31 is located.

The sensing chip 103 and the bus capacitor 32 are respectively located in the two electromagnetic shielding chambers, so that better electromagnetic shielding effect exists between the sensing chip 103 and the bus capacitor 32, and mutual interference between components in the motor controller 30 is avoided, to further improve precision of controlling the brake motor 20 and further improve detection precision of the position sensor.

In an embodiment, the transmission gear assembly 40 includes a plurality of gears 41. The gear 41 of the transmission gear assembly 40 is arranged between the stator 22 and the circuit board 31 in the axial direction of the motor shaft 21 of the brake motor 20. The gear 41 of the transmission gear assembly 40 includes a first end face 411 that faces the circuit board 31. A gap between the bus capacitor 32 and the stator 22 is greater than a gap between the first end face 411 and the stator 22.

FIG. 11 is a cross-sectional view of the electro-mechanical brake apparatus 100 according to an embodiment of this application.

In an embodiment, the gear 41 of the transmission gear assembly 40 is arranged, in the axial direction of the motor shaft 21, on a side that is of the middle partition plate 70 and that faces away from the circuit board 31. Each gear 41 of the transmission gear assembly 40 is spaced from the bus capacitor 32 in the radial direction of the motor shaft 21. The bus capacitor 32 on the circuit board 31 further extends toward the stator 22 after passing through the middle partition plate 70, so that a size, in the axial direction of the motor shaft 21, of the second chamber 112 in which the circuit board 31 is located can be further reduced, to compress an overall outline size of the electro-mechanical brake apparatus 100. In this way, an internal structure of the electro-mechanical brake apparatus 100 is more compact, and a size in the axial direction of motor shaft 21 is smaller.

In an embodiment, the housing 10 of the electro-mechanical brake apparatus 100 is configured to fasten one plug terminal 104. The motor controller 30 includes one terminal interface 33. The terminal interface 33 is fastened, in the axial direction of the motor shaft 21 of the brake motor 20, on the surface that is of the circuit board 31 and that faces the stator 22. One end of the plug terminal 104 extends into the housing 10 and is electrically connected to the terminal interface 33.

In an embodiment, the transmission gear assembly 40 is arranged between the middle partition plate 70 and the stator 22 in the axial direction of the motor shaft 21 of the brake motor 20. The middle partition plate 70 includes a plurality of positioning holes 105. The electro-mechanical brake apparatus 100 includes a plurality of bearings 106. Each positioning hole 105 is configured to fasten an outer ring of one bearing 106. An inner ring of each bearing 106 is configured to fasten one transmission shaft 42 of the transmission gear assembly 40.

In an embodiment, the circuit board 31 and the gear 41 of the transmission gear assembly 40 are arranged on two sides of the middle partition plate 70 respectively in the axial direction of the motor shaft 21 of the brake motor 20. A side that is of the middle partition plate 70 and that faces the stator 22 is configured to fasten the plurality of bearings 106 to support one end of the transmission shaft 42 of the transmission gear assembly 40.

In an embodiment, the housing 10 includes a plurality of positioning holes 105. Each positioning hole 105 on the housing 10 is configured to be aligned with one positioning hole 105 of the middle partition plate 70 in the radial direction of the motor shaft 21. The positioning hole 105 on the housing 10 is located, in the axial direction of the motor shaft 21, on a side that is of the gear 41 and that faces away from the middle partition plate 70. Each positioning hole 105 on the housing 10 is configured to fasten an outer ring of one bearing 106. A side that is of the housing 10 and that faces the middle partition plate 70 is configured to fasten the plurality of bearings 106 to support another end of the transmission shaft 42 of the transmission gear assembly 40.

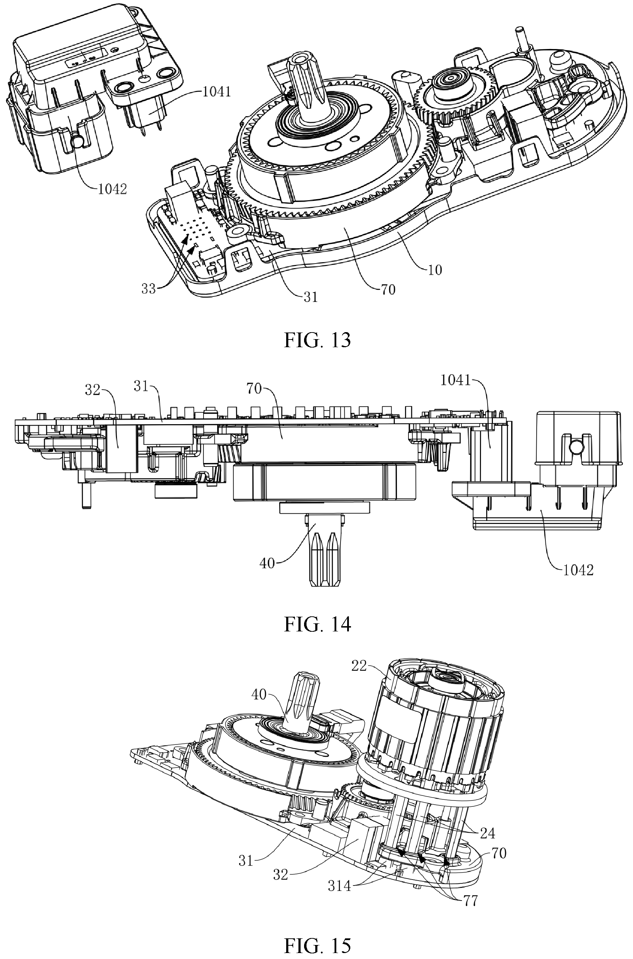

Refer to FIG. 12 to FIG. 14. FIG. 12 is a diagram of a structure of the electro-mechanical brake apparatus 100 according to an embodiment of this application. FIG. 13 is an exploded view of a structure of the electro-mechanical brake apparatus 100 according to an embodiment of this application. FIG. 14 is a diagram of a structure of the electro-mechanical brake apparatus 100 according to an embodiment of this application.

In an embodiment, the terminal interface 33 is separately spaced from the bus capacitor 32 and the sensing chip 103 in the radial direction of the motor shaft 21. In this embodiment, the terminal interface 33 is arranged on a side that is of the transmission gear assembly 40 and that faces away from the sensing chip 103. The housing 10 includes a plug hole 12. In the axial direction of the motor shaft 21, the plug hole 12 is located on the side that is of the circuit board 31 and that faces the stator 22, and the plug hole 12 is aligned with the terminal interface 33. A segment of the plug terminal 104 passes through the plug hole 12 and extends into the second chamber, and is electrically connected to the terminal interface 33, to implement communication between the motor controller 30 and the outside.

In the radial direction of the motor shaft 21, the plug terminal 104 is spaced from the middle partition plate 70 and the transmission gear assembly 40, and the plug terminal 104 is electrically connected to the terminal interface 33 of the circuit board 31 across the middle partition plate 70 and the transmission gear assembly 40, to effectively control an outline size, in the axial direction of the motor shaft 21, of the electro-mechanical brake apparatus 100 provided in this application, so that an internal structure of the electro-mechanical brake apparatus 100 is more compact.

In an embodiment, the plug terminal 104 includes another segment located outside the housing 10. In this embodiment, the plug terminal 104 includes two interconnected segments. For ease of description, in subsequent embodiments, a segment located inside the housing 10 is defined as a first segment 1041, and a segment located outside the housing 10 is defined as a second segment 1042.

In an embodiment, the second segment 1042 is bent in a U shape and then extends toward the circuit board 31 in the axial direction of the motor shaft 21 of the brake motor 20. The screw nut 61 is located between the plug terminal 104 and the stator 22 of the brake motor 20 in the radial direction of the motor shaft 21. The screw nut 61 is located, in the axial direction of the motor shaft 21, on the side that is of the gear 41 of the transmission gear assembly 40 and that faces away from the middle partition plate 70. The screw nut 61 is in a transmission connection to the transmission gear assembly 40 through one transmission shaft 42.

The plug terminal 104 is arranged in space on a side that is of the transmission gear assembly 40 and that faces away from the brake motor 20, and extends toward the side of the circuit board 31 after being bent, so that interference between the second segment 1042 of the plug terminal 104 and the screw nut 61 is avoided and a structure of the electro-mechanical brake apparatus 100 is more compact.

In an embodiment, the circuit board 31 includes a second metal member. The middle partition plate 70 includes a second shielding wall. The second metal member and the second shielding wall abut against each other in the axial direction of the motor shaft 21 of the brake motor 20. The second metal member is arranged between the terminal interface 33 and the transmission gear assembly 40 in the radial direction of the motor shaft 21 of the brake motor 20.

In an embodiment, the second shielding wall of the middle partition plate 70 is located, in the radial direction of the motor shaft 21, on a side that is of the plurality of positioning holes 105 and that faces away from the avoidance hole 73. The plug terminal 104 is located on a side that is of the transmission gear assembly 40 and that faces away from the motor shaft 21, and is spaced from the middle partition plate 70 in the radial direction of the motor shaft 21. The positioning holes 105 are respectively aligned with the gears 41 of the transmission gear assembly 40 in the radial direction of the motor shaft 21. The avoidance hole 73 is aligned with the motor shaft 21 in the radial direction of the motor shaft 21. The second shielding wall is located between the plug terminal 104 and the transmission gear assembly 40.

The second metal member of the circuit board 31 is arranged between and spaced from the terminal interface 33 and the sensing chip 103 in the radial direction of the motor shaft 21. The terminal interface 33 is aligned with the plug terminal 104 in the radial direction of the motor shaft 21. The sensing chip 103 is aligned with the avoidance hole 73 in the radial direction of the motor shaft 21. The second metal member and the second shielding wall are aligned in the radial direction of the motor shaft 21, and abut against each other in the axial direction of the motor shaft 21. The second metal member and the second shielding wall are configured to separate the sensing chip 103 from the terminal interface 33, so that mutual interference between the sensing chip 103 and the terminal interface 33 is avoided, to improve detection precision of the position sensor and ensure reliable communication between the motor controller 30 and an external component.

In an embodiment, the second shielding wall extends approximately in a direction perpendicular to an arrangement direction of the transmission gear assembly 40 and the plug terminal 104. The second metal member extends approximately in a direction perpendicular to an arrangement direction of the terminal interface 33 and the sensing chip 103. The second metal member and the second shielding wall abut against each other in the axial direction of the motor shaft 21, to form two independent electromagnetic shielding chambers in the second chamber 112 in which the circuit board 31 is located.

The sensing chip 103 and the terminal interface 33 are respectively located in the two electromagnetic shielding chambers, so that better electromagnetic shielding effect exists between the sensing chip 103 and the terminal interface 33, and mutual interference between components in the motor controller 30 is avoided, to further improve detection precision of the position sensor and ensure reliable communication between the motor controller 30 and an external component.

In an embodiment, the terminal interface 33 includes a plurality of high-voltage sockets and a plurality of low-voltage sockets. The plurality of high-voltage sockets are configured to receive a high-voltage drive signal of the brake motor 20 through the plug terminal 104. The plurality of low-voltage sockets are configured to transmit a low-voltage control signal through the plug terminal 104. The bus capacitor 32 and the terminal interface 33 are spaced apart in a direction perpendicular to an arrangement direction of the motor shaft 21 and the transmission gear assembly 40. The plurality of high-voltage sockets 331 are arranged between the bus capacitor 32 and the plurality of low-voltage sockets.

In an embodiment, the bus capacitor 32 and the terminal interface 33 are spaced apart in the arrangement direction of the motor shaft 21 and the transmission gear assembly 40, and are spaced apart in the direction perpendicular to the arrangement direction of the motor shaft 21 and the transmission gear assembly 40. The plurality of high-voltage sockets are arranged between the bus capacitor 32 and the plurality of low-voltage sockets. The high-voltage socket is arranged close to the side of the bus capacitor 32, so that a transmission path between the high-voltage drive signal and the bus capacitor 32 can be shortened, and a transmission path of the low-voltage control signal and a transmission path of the high-voltage drive signal do not cross, to facilitate transmission circuit arrangement on the circuit board 31.

In an embodiment, the circuit board 31 includes a three-phase copper busbar socket 314. The brake motor 20 includes a three-phase copper busbar 24. The three-phase copper busbar 24 of the brake motor 20 is configured to extend into the three-phase copper busbar socket 314. The three-phase copper busbar socket 314 penetrates the circuit board 31 in the axial direction of the motor shaft 21 of the brake motor 20. A length of the three-phase copper busbar 24 is greater than a gap between the circuit board 31 and the stator 22 in the axial direction of the motor shaft 21. The three-phase copper busbar socket 314 and the bus capacitor 32 are spaced apart in a circumferential direction of the motor shaft 21 of the brake motor 20. The three-phase copper busbar socket 314 includes three sockets. The three sockets are sequentially spaced apart in the circumferential direction of the motor shaft 21.

FIG. 15 is a diagram of a partial structure of the electro-mechanical brake apparatus 100 according to an embodiment of this application.

In an embodiment, the three-phase copper busbar socket 314 is located between the bus capacitor 32 and the sensing chip 103 in the radial direction of the motor shaft 21. The three sockets of the three-phase copper busbar socket 314 and the bus capacitor 32 are spaced apart sequentially in the circumferential direction of the motor shaft 21. The three-phase copper busbar 24 includes three copper busbars. In the axial direction of the motor shaft 21, one end of each copper busbar is fastened to the stator 22 and is electrically connected to a winding of the stator 22, and the other end passes through one socket of the circuit board 31 and is electrically connected to the bus capacitor 32. The three-phase copper busbar 24 of the brake motor 20 penetrates the circuit board 31 and receives a drive signal of the motor controller 30.

The three-phase copper busbar 24 is close to the bus capacitor 32 in the circumferential direction of the motor shaft 21, and the three copper busbars in the three-phase copper busbar 24 are spaced apart in the circumferential direction of the motor shaft 21, so that a transmission path between the three-phase copper busbar 24 and the bus capacitor 32 can be shortened, and planar space of the circuit board 31 is properly used. In this way, the circuit board 31 is arranged more compactly, and a size, in the radial direction of the motor shaft 21, of the electro-mechanical brake apparatus 100 provided in this application is compressed.

In an embodiment, the middle partition plate 70 includes three through holes 77. The three through holes 77 are spaced from the avoidance hole 73 in the radial direction of the motor shaft 21. The three through holes 77 are disposed around an outer side of the avoidance hole 73. The three through holes 77 are sequentially spaced apart in the circumferential direction of the motor shaft 21. The three through holes 77 are aligned with the three sockets one by one in the radial direction of the motor shaft 21.

In the axial direction of the motor shaft 21, one end of each copper busbar is fastened to the stator 22 and is electrically connected to the winding of the stator 22, and the other end passes through one through hole 77 of the middle partition plate 70 and one socket of the circuit board 31 sequentially and is electrically connected to the bus capacitor 32. In other words, the three-phase copper busbar 24 of the brake motor 20 penetrates the circuit board 31 and the middle partition plate 70, and receives the drive signal of the motor controller 30.

The through hole 77 of the middle partition plate 70 may be configured to assist in locating the three-phase copper busbar 24, to ensure that the three-phase copper busbar 24 can pass through the socket of the circuit board smoothly after the circuit board 31 is installed in the second chamber 112. The through hole 77 of the middle partition plate 70 can further limit displacement of a middle segment of the three-phase copper busbar 24 in the axial direction of the motor shaft 21, to avoid large deformation of the three-phase copper busbar 24 after being welded to the circuit board 31.

In an embodiment, the electro-mechanical brake apparatus 100 includes a motor bearing 107. The brake motor 20 includes a motor gear 25. The motor shaft 21 of the brake motor 20 is configured to fasten one motor gear 25 and an inner ring of one motor bearing 107. The brake motor 20 drives, through the motor shaft 21, the motor gear 25 to rotate and drives the gear 41 of the transmission gear assembly 40. The housing 10 includes a second partition plate 15. The second partition plate 15 is configured to fasten an outer ring of the motor bearing 107. The second partition plate 15 is arranged between the middle partition plate 70 and the stator 22 in the axial direction of the motor shaft 21 of the brake motor 20. The motor bearing 107 is arranged between the motor gear 25 and the stator 22 in the axial direction of the motor shaft 21.

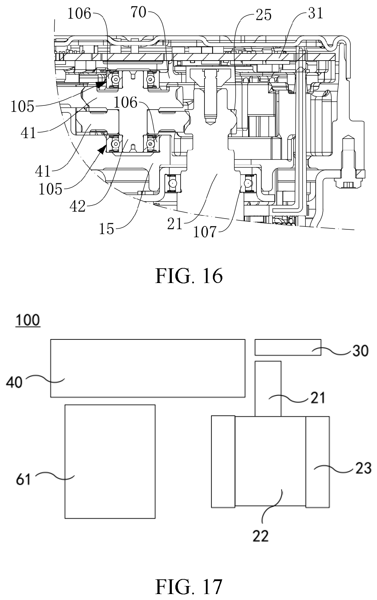

FIG. 16 is a cross-sectional view of the electro-mechanical brake apparatus 100 according to an embodiment of this application.

In an embodiment, the stator 22, the second partition plate 15, the motor gear 25, and the middle partition plate 70 are sequentially arranged in the axial direction of the motor shaft 21. The motor shaft 21 sequentially passes through the stator 22, the second partition plate 15, the motor gear 25, and the middle partition plate 70. The second partition plate 15 in the housing 10 of the electro-mechanical brake apparatus 100 is configured to separate the chamber of the stator 22 of the brake motor 20 from the chamber of the transmission gear assembly 40. In other words, the second partition plate 15 is configured to separate the first chamber 111 from the third chamber 113.

The second partition plate 15 supports the motor shaft 21 through the motor bearing 107, so that the motor shaft 21 can extend into the chamber in which the gear 41 of the transmission gear assembly 40 is located and be in a transmission connection to the gear 41. In other words, one end of the motor shaft 21 extends into the chamber of the transmission gear assembly 40, and the motor gear 25 on the motor shaft 21 is configured to be in a transmission connection to the gear 41.

In an embodiment, the second partition plate 15 includes a plurality of positioning holes 105. Each positioning hole 105 is configured to fasten an outer ring of one bearing 106. An inner ring of each bearing 106 is configured to fasten one transmission shaft 42 of the transmission gear assembly 40. The second partition plate 15 is configured to support the other end of each transmission shaft 42 in the transmission gear assembly 40.

In an embodiment, the plurality of positioning holes 105 on the second partition plate 15 are aligned with the plurality of positioning holes 105 on the middle partition plate 70 one by one in the radial direction of the motor shaft 21. A pair of aligned positioning holes 105 are arranged on two sides of one transmission shaft 42 respectively in the axial direction of the motor shaft 21. The pair of aligned positioning holes 105 are respectively configured to fasten outer rings of a pair of bearings 106. Inner rings of the pair of bearings 106 are respectively configured to fasten two ends of one transmission shaft 42 to support the transmission shaft 42.

In an embodiment, in the electro-mechanical brake apparatus 100 provided in this application, the circuit board 31 and the transmission gear assembly 40 are spaced apart in the radial direction of the motor shaft 21, to further compress a size, in the radial direction of the motor shaft 21, of the electro-mechanical brake apparatus 100.

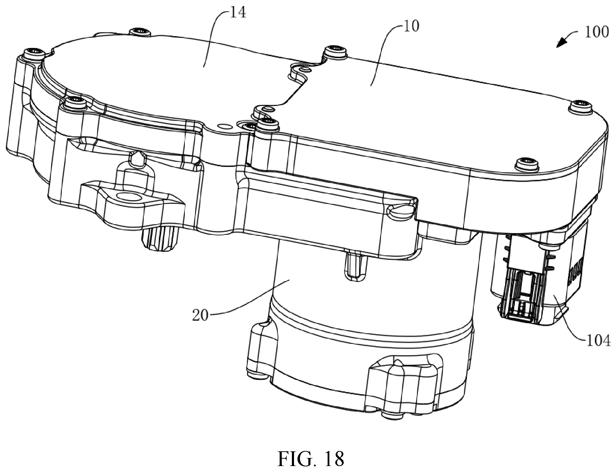

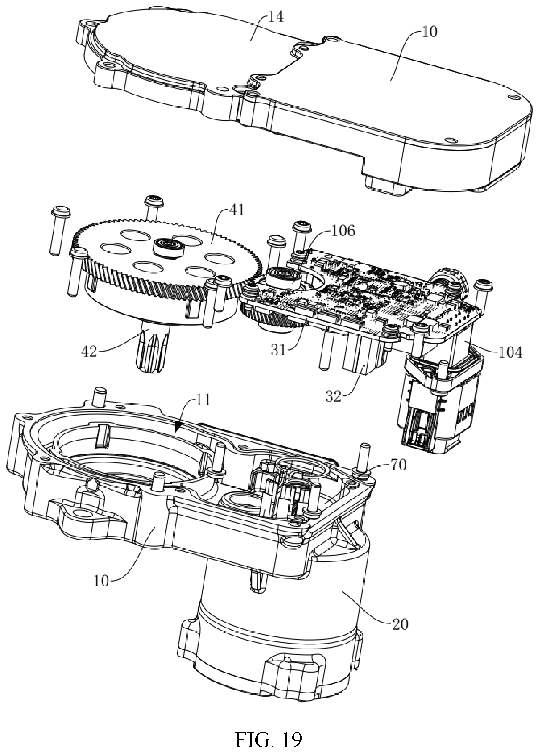

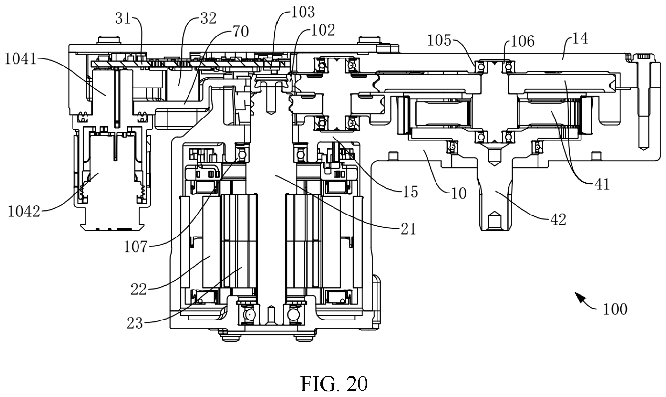

Refer to FIG. 17 to FIG. 20. FIG. 17 is a diagram of a framework of the electro-mechanical brake apparatus 100 according to an embodiment of this application. FIG. 18 is a diagram of a partial structure of the electro-mechanical brake apparatus 100 according to an embodiment of this application. FIG. 19 is an exploded view of a structure of the electro-mechanical brake apparatus 100 according to an embodiment of this application. FIG. 20 is a cross-sectional view of the electro-mechanical brake apparatus 100 according to an embodiment of this application.

In the embodiment shown in the figure, the housing 10 includes a bearing cover plate 14. The bearing cover plate 14 includes a plurality of positioning holes 105. Each positioning hole 105 is configured to fasten an outer ring of one bearing 106. An inner ring of each bearing 106 is configured to fasten one transmission shaft 42 of the transmission gear assembly 40. The bearing cover plate 14 is arranged, in the axial direction of the motor shaft 21 of the brake motor 20, on a side that is of the middle partition plate 70 and that faces away from the stator 22. The bearing cover plate 14 and the circuit board 31 are arranged adjacent to each other in the radial direction of the motor shaft 21 of the brake motor 20.

In this way, in this embodiment, the motor controller 30, the brake motor 20, and the transmission gear assembly 40 are also located in the three different chambers of the housing 10 respectively. The chamber of the motor controller 30 and the chamber of the brake motor 20 are arranged in the axial direction of the motor shaft 21, the chamber of the transmission gear assembly 40 and the chamber of the brake motor 20 are arranged in the radial direction of the motor shaft 21, and the chamber of the transmission gear assembly 40 and the chamber of the motor controller 30 are further arranged in the radial direction of the motor shaft 21.

In this embodiment, the middle partition plate 70 and the gear 41 of the transmission gear assembly 40 are spaced apart in the radial direction of the motor shaft 21, and the circuit board 31 and the transmission gear assembly 40 are arranged in the radial direction of the motor shaft 21. In the axial direction of the motor shaft 21, the circuit board 31, the middle partition plate 70, and the stator 22 are sequentially arranged, and the bus capacitor 32 partially passes through the middle partition plate 70. The middle partition plate 70 is configured to separate the chamber of the motor controller 30 from the chamber of the brake motor 20, to prevent oil used for lubricating transmission between the motor shaft 21 and the transmission gear assembly 40 from flowing into the second chamber 112 on the side of the circuit board 31.

According to the electro-mechanical brake apparatus 100 provided in this embodiment, the axial size is also compressed. Further, the chamber of the motor controller 30 and the chamber of the transmission gear assembly 40 are spaced apart in the radial direction of the motor shaft 21, to compress the radial size of the electro-mechanical brake apparatus 100. In this way, more wheel space is reserved for the vehicle.

Embodiments in the electro-mechanical brake apparatus 100 shown in FIG. 3 may be correspondingly used in the electro-mechanical brake apparatus 100 provided in FIG. 17.

For example, in an embodiment, the gear 41 of the transmission gear assembly 40 and the middle partition plate 70 are spaced apart in the radial direction of the motor shaft 21. The circuit board 31 and the bearing cover plate 14 are spaced apart in the radial direction of the motor shaft 21. A side that is of the bearing cover plate 14 and that faces the stator 22 is configured to fasten the plurality of bearings 106 to support the transmission shaft 42 of the transmission gear assembly 40. The stator 22 of the brake motor 20, the middle partition plate 70, and the circuit board 31 are sequentially arranged in the axial direction of the motor shaft 21 of the brake motor 20, so that an internal structure of the electro-mechanical brake apparatus 100 is more compact, and a size in the axial direction of the motor shaft 21 is smaller.

In an embodiment, the housing 10 includes a plurality of positioning holes 105. Each positioning hole 105 on the housing 10 is aligned with one positioning hole 105 on the bearing cover plate 14 in the radial direction of the motor shaft 21. The positioning hole 105 on the housing 10 is located, in the axial direction of the motor shaft 21, on a side that is of the gear 41 and that faces away from the bearing cover plate 14. Each positioning hole 105 on the housing 10 is configured to fasten an outer ring of one bearing 106. A side that is of the housing 10 and that faces the bearing cover plate 14 is configured to fasten the plurality of bearings 106 to support the transmission shaft 42 of the transmission gear assembly 40.

In an embodiment, the first segment 1041 of the plug terminal 104 extends into the second chamber 112 of the housing 10 and is electrically connected to the terminal interface 33 of the circuit board 31. The second segment 1042 extends in a direction away from the circuit board 31 in the axial direction of the motor shaft 21.

The stator 22 of the brake motor 20, the gear 41 of the transmission gear assembly 40, the middle partition plate 70, and the circuit board 31 are sequentially arranged in the axial direction of the motor shaft 21 of the brake motor 20. The plug terminal 104 is arranged, in the radial direction of the motor shaft 21 of the brake motor 20, in space on a side that is of the transmission gear assembly 40 and that faces away from the brake motor 20, so that a structure of the electro-mechanical brake apparatus 100 is more compact. The plug terminal 104 and the brake motor 20 are located on a same side of the circuit board 31 in the axial direction of the motor shaft 21 of the brake motor 20, so that a size, in the axial direction of the motor shaft 21, of the electro-mechanical brake apparatus 100 is smaller.

In an embodiment, the circuit board 31 includes a third metal member. The middle partition plate 70 includes a third shielding wall. The third metal member and the third shielding wall abut against each other in the axial direction of the motor shaft 21 of the brake motor 20. The terminal interface 33 and the bus capacitor 32 are arranged on a same side of the motor shaft 21 of the brake motor 20 in the radial direction of the motor shaft 21 of the brake motor 20. The third metal member is arranged between the terminal interface 33 and the bus capacitor 32.

In an embodiment, the third metal member of the circuit board 31 is arranged between and spaced from the terminal interface 33 and the bus capacitor 32 in the radial direction of the motor shaft 21. The plug terminal 104 is aligned with the terminal interface 33 in the radial direction of the motor shaft 21. The third shielding wall of the middle partition plate 70 is located, in the radial direction of the motor shaft 21, on a side that is of the avoidance notch 71 and that faces the plug terminal 104.

The third metal member and the third shielding wall are aligned in the radial direction of the motor shaft 21, and abut against each other in the axial direction of the motor shaft 21. The third metal member and the third shielding wall are configured to separate the sensing chip 103 from the terminal interface 33, so that mutual interference between the bus capacitor 32 and the terminal interface 33 is avoided, to improve precision of controlling the brake motor 20 and ensure reliable communication between the motor controller 30 and an external component.

In an embodiment, the third shielding wall extends approximately in a direction perpendicular to an arrangement direction of the avoidance notch 71 and the plug terminal 104. The third metal member extends approximately in a direction perpendicular to an arrangement direction of the terminal interface 33 and the bus capacitor 32. The third metal member and the third shielding wall abut against each other in the axial direction of the motor shaft 21, to form two independent electromagnetic shielding chambers in the second chamber 112 in which the circuit board 31 is located.

The bus capacitor 32 and the terminal interface 33 are respectively located in the two electromagnetic shielding chambers, so that better electromagnetic shielding effect exists between the bus capacitor 32 and the terminal interface 33, and mutual interference between components in the motor controller 30 is avoided, to further improve precision of controlling the brake motor 20 and ensure reliable communication between the motor controller 30 and an external component.

In an embodiment, the middle partition plate 70 includes an avoidance notch 71. The avoidance notch 71 is configured to avoid the bus capacitor 32 and allow the bus capacitor 32 to pass through. In the axial direction of the motor shaft 21, one end of two opposite ends of the bus capacitor 32 is located in the second chamber 112 and is fastened to the circuit board 31, and the other end passes through the avoidance notch 71 and extends into the third chamber 113. Because an outer surface of the bus capacitor 32 has good sealing performance, normal working of the bus capacitor 32 and the motor controller 30 is not affected when a part of the bus capacitor passes through the middle partition plate 70.

In an embodiment, the middle partition plate 70 includes a sealing ring member, and the sealing ring member is disposed around a periphery of the bus capacitor 32, and is configured to fill the gap between the avoidance notch 71 and the bus capacitor 32, to prevent lubricating grease or lubricating oil of the brake motor 20 in the first chamber 111 from flowing into the second chamber 112.

In an embodiment, a distance between the bus capacitor 32 and the stator 22 is less than a distance between the middle partition plate 70 and the stator 22 in the axial direction of the motor shaft 21. In other words, the bus capacitor 32 passes through the middle partition plate 70 and further extends toward the stator 22. In this case, the bus capacitor 32 is spaced from the motor shaft 21, the gear of the transmission gear assembly 40, and the like in the radial direction of the motor shaft 21. In this way, an axial size of the electro-mechanical brake apparatus 100 provided in this application can be further compressed, and space on a side edge of the motor shaft 21 can be fully used.

In an embodiment, the motor shaft 21 of the brake motor 20 extends toward the circuit board 31 and passes through the middle partition plate 70 in the axial direction of the motor shaft 21 of the brake motor 20. An end portion that is of the motor shaft 21 and that faces the circuit board 31 is configured to fasten one magnetic ring 102. The circuit board 31 is configured to fasten a sensing chip 103 of one position sensor. A projection of the magnetic ring 102 onto the circuit board 31 partially overlaps with the sensing chip 103.

In an embodiment, the middle partition plate 70 includes an avoidance hole 73. The avoidance hole 73 penetrates the middle partition plate 70 in the axial direction of the motor shaft 21. One end that is of the motor shaft 21 and that faces away from the stator 22 extends into the avoidance hole 73 in the axial direction of the motor shaft 21. The magnetic ring 102 is fastened to the end that is of the motor shaft 21 and that faces away from the stator 22. The sensing chip 103 is fastened on a surface of a side that is of the circuit board 31 and that faces the middle partition plate 70. The projection of the magnetic ring 102 onto the circuit board 31 is located in the sensing chip 103.

In an embodiment, the magnetic ring 102 is located in the avoidance hole 73 in the axial direction of the motor shaft 21, to reduce space occupied by the magnetic ring 102. In this way, the distance between the circuit board 31 and the middle partition plate 70 is compressed, so that an internal structure of the electro-mechanical brake apparatus 100 is more compact, and a size in the axial direction of the motor shaft 21 is smaller.

In an embodiment, in the axial direction of the motor shaft 21, one end of the magnetic ring 102 is fastened to the end portion of the motor shaft 21, and the other end of the magnetic ring faces the circuit board 31 and passes through the avoidance hole 73. In this way, a distance between the magnetic ring 102 and the sensing chip 103 is smaller, to facilitate detecting the rotation speed of the magnetic ring 102 by the sensing chip 103, so that detection precision of the position sensor is improved.

In an embodiment, the electro-mechanical brake apparatus 100 includes a motor bearing 107. The brake motor 20 includes a motor gear 25. The motor shaft 21 of the brake motor 20 is configured to fasten one motor gear 25 and an inner ring of one motor bearing 107. The brake motor 20 drives, through the motor shaft 21, the motor gear 25 to rotate and drives the gear 41 of the transmission gear assembly 40. The housing 10 includes a second partition plate 15. The second partition plate 15 is configured to fasten an outer ring of the motor bearing 107. The second partition plate 15 is arranged between the middle partition plate 70 and the stator 22 in the axial direction of the motor shaft 21 of the brake motor 20. The motor bearing 107 is arranged between the motor gear 25 and the stator 22 in the axial direction of the motor shaft 21.

In an embodiment, the plurality of positioning holes 105 on the second partition plate 15 are aligned with the plurality of positioning holes 105 on the bearing cover plate 14 one by one in the radial direction of the motor shaft 21. A pair of aligned positioning holes 105 are arranged on two sides of one transmission shaft 42 respectively in the axial direction of the motor shaft 21. The pair of aligned positioning holes 105 are respectively configured to fasten outer rings of a pair of bearings 106. Inner rings of the pair of bearings 106 are respectively configured to fasten two ends of one transmission shaft 42, so that the transmission shaft 42 can also be supported.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. An electro-mechanical brake apparatus with a partitioned-chamber layout, wherein the electro-mechanical brake apparatus comprises a brake motor, a motor controller, a transmission gear assembly, a middle partition plate, and a brake pad, the motor controller is configured to control rotation of the brake motor, the brake motor is configured to drive, through the transmission gear assembly, the brake pad to brake, and the motor controller comprises a circuit board and a bus capacitor;
the brake motor, the circuit board, and the transmission gear assembly are respectively arranged in different chambers of the electro-mechanical brake apparatus, the circuit board is arranged in an axial direction of a motor shaft of the brake motor, and the transmission gear assembly is arranged in a radial direction of the motor shaft of the brake motor; and
in the axial direction of the motor shaft of the brake motor, the middle partition plate is arranged between a stator of the brake motor and the circuit board, the middle partition plate is configured to separate the brake motor from the circuit board, the bus capacitor is fastened on a surface that is of the circuit board and that faces the stator, and a height of the bus capacitor is greater than a gap between the circuit board and the middle partition plate in a direction perpendicular to the circuit board.

2. The electro-mechanical brake apparatus according to claim 1, wherein in the axial direction of the motor shaft of the brake motor, the motor shaft of the brake motor extends toward the circuit board and passes through the middle partition plate, an end portion that is of the motor shaft and that faces the circuit board is configured to fasten one magnetic ring, the circuit board is configured to fasten a sensing chip of one position sensor, and a projection of the magnetic ring onto the circuit board partially overlaps with the sensing chip.

3. The electro-mechanical brake apparatus according to claim 2, wherein the circuit board comprises a first metal member, and the middle partition plate comprises a first shielding wall;
the first metal member and the first shielding wall abut against each other in the axial direction of the motor shaft of the brake motor; and
the first metal member is arranged between the sensing chip and the bus capacitor in the radial direction of the motor shaft of the brake motor.

4. The electro-mechanical brake apparatus according to any one of claims 1 to 3, wherein in the axial direction of the motor shaft of the brake motor, a gear of the transmission gear assembly is arranged between the stator and the circuit board, the gear of the transmission gear assembly comprises a first end face that faces the circuit board, and a gap between the bus capacitor and the stator is greater than a gap between the first end face and the stator.

5. The electro-mechanical brake apparatus according to any one of claims 1 to 4, wherein a housing of the electro-mechanical brake apparatus is configured to fasten one plug terminal, and the motor controller comprises one terminal interface; and
in the axial direction of the motor shaft of the brake motor, the terminal interface is fastened on the surface that is of the circuit board and that faces the stator, and a segment of the plug terminal extends into the housing and is electrically connected to the terminal interface.

6. The electro-mechanical brake apparatus according to claim 5, wherein in the axial direction of the motor shaft of the brake motor, the gear of the transmission gear assembly is arranged between the middle partition plate and the stator, the middle partition plate comprises a plurality of positioning holes, each of the positioning holes is configured to fasten an outer ring of one bearing, and an inner ring of each bearing is configured to fasten one transmission shaft of the transmission gear assembly.

7. The electro-mechanical brake apparatus according to claim 6, wherein the plug terminal comprises another segment located outside the housing, the another segment is configured to extend in the axial direction of the motor shaft of the brake motor, and the another segment of the plug terminal and the motor shaft of the brake motor are arranged on two sides of the transmission gear assembly in the radial direction of the motor shaft of the brake motor.

8. The electro-mechanical brake apparatus according to claim 6 or 7, wherein the circuit board comprises a second metal member, and the middle partition plate comprises a second shielding wall;
the second metal member and the second shielding wall abut against each other in the axial direction of the motor shaft of the brake motor; and
the second metal member is arranged between the terminal interface and the transmission gear assembly in the radial direction of the motor shaft of the brake motor.

9. The electro-mechanical brake apparatus according to claim 5, wherein the housing comprises a bearing cover plate, the bearing cover plate comprises a plurality of positioning holes, each of the positioning holes is configured to fasten an outer ring of one bearing, and an inner ring of each bearing is configured to fasten one transmission shaft of the transmission gear assembly;
the bearing cover plate is arranged, in the axial direction of the motor shaft of the brake motor, on a side that is of the middle partition plate and that faces away from the stator; and
the bearing cover plate and the circuit board are arranged adjacent to each other in the radial direction of the motor shaft of the brake motor.

10. The electro-mechanical brake apparatus according to claim 9, wherein the plug terminal comprises another segment located outside the housing, the another segment is bent in a U shape and then extends toward the circuit board in the axial direction of the motor shaft of the brake motor, and the another segment and the motor shaft are arranged on two sides of the bus capacitor in the radial direction of the motor shaft of the brake motor.

11. The electro-mechanical brake apparatus according to claim 9 or 10, wherein the circuit board comprises a third metal member, and the middle partition plate comprises a third shielding wall;
the third metal member and the third shielding wall abut against each other in the axial direction of the motor shaft of the brake motor; and
in the radial direction of the motor shaft of the brake motor, the terminal interface and the bus capacitor are arranged on a same side of the motor shaft of the brake motor, and the third metal member is arranged between the terminal interface and the bus capacitor.

12. The electro-mechanical brake apparatus according to any one of claims 5 to 11, wherein the terminal interface comprises a plurality of high-voltage sockets and a plurality of low-voltage sockets, the plurality of high-voltage sockets are configured to receive a high-voltage drive signal of the brake motor through the plug terminal, and the plurality of low-voltage sockets are configured to transmit a low-voltage control signal through the plug terminal; and
in a direction perpendicular to an arrangement direction of the motor shaft and the transmission gear assembly, the bus capacitor and the terminal interface are spaced apart, and the plurality of high-voltage sockets are arranged between the bus capacitor and the plurality of low-voltage sockets.

13. The electro-mechanical brake apparatus according to any one of claims 1 to 12, wherein the circuit board comprises a three-phase copper busbar socket, and a three-phase copper busbar of the brake motor is configured to extend into the three-phase copper busbar socket;
in the axial direction of the motor shaft of the brake motor, the three-phase copper busbar socket penetrates the circuit board, and a length of the three-phase copper busbar is greater than a gap between the circuit board and the stator; and
in a circumferential direction of the motor shaft of the brake motor, the three-phase copper busbar socket and the bus capacitor are spaced apart, and three sockets in the three-phase copper busbar socket are spaced apart sequentially.

14. The electro-mechanical brake apparatus according to any one of claims 1 to 13, wherein the motor shaft of the brake motor is configured to fasten one motor gear and an inner ring of one motor bearing, the brake motor drives, through the motor shaft, the motor gear to rotate and drive the gear of the transmission gear assembly, the housing comprises a second partition plate, and the second partition plate is configured to fasten an outer ring of the motor bearing; and
in the axial direction of the motor shaft of the brake motor, the second partition plate is arranged between the middle partition plate and the stator, and the motor bearing is arranged between the motor gear and the stator.

15. A vehicle, wherein the vehicle comprises a wheel and the electro-mechanical brake apparatus according to any one of claims 1 to 14, the electro-mechanical brake apparatus is fastened to a frame of the vehicle, and the electro-mechanical brake apparatus is configured to brake a brake disc of the wheel.
